# EUROPÄISCHE PATENTANMELDUNG

(11) **EP 4 628 767 A1**
(43) Veröffentlichungstag der Anmeldung: **08.10.2025**
(21) Anmeldenummer: 25165146.9
(22) Anmeldetag: 20.03.2025
(51) Int. Cl.: F16K 17/19

(54) **DRUCKABHÄNGIGE VENTILANORDNUNG**

(30) Priorität: 05.04.2024 DE 102024109565
(71) Anmelder: Flammer GmbH, 74389 Cleebronn (DE)
(72) Erfinder: Köhler, Ralph, 75045 Walzbachtal (DE)
(74) Vertreter: Rüger Abel Patentanwälte PartGmbB

(57) **Zusammenfassung**

Die erfindungsgemäße Ventilanordnung (10) beruht auf einem für vielfältigen Einsatz geeigneten Grundaufbau, der aufgrund des Vorhandenseins eines einzigen Einlassventils (27) eine hohe Zuverlässigkeit beim Öffnen infolge Unterdruckes aufweist. Durch die Anordnung des Saugventils (27) und des Druckventils (32) nebeneinander auf gleicher Höhe ergibt sich außerdem ein sehr kompaktes Gehäuse (11) mit geringem Innenvolumen (16), wodurch sich eine geringe Kondensatanfälligkeit ergibt. Durch die lediglich geringe Kondensatanfälligkeit ist die Gefahr des Verklebens, insbesondere dann gemindert, wenn das Einlassventil (27) langzeitig in Schließstellung verbleibt, beispielsweise in Situationen, bei denen die Ventile (27, 32) selten oder nie öffnen.

## Beschreibung

Die Erfindung betrifft eine druckabhängige Ventilanordnung zum Be- und Entlüften von Behältern, Rohrleitungen oder sonstigen Anlagenteilen, die wenigstens teilweise mit einem gasförmigen Fluid gefüllt sind, z.B. oberhalb eines Flüssigkeitsspiegels ein Luftpolster enthalten. Insbesondere betrifft die Erfindung eine druckabhängige Ventilanordnung zur Anordnung an Tanks oder anderen Analgenteilen, die brennbare oder unbrennbare Flüssigkeiten mit wechselnden Füllständen und/oder Temperaturen enthalten können.

Anlagen und Behälter der genannten Art, zum Beispiel Tanks für brennbare Flüssigkeiten, Wassertanks oder auch Leitungen, werden zum Druckausgleich häufig mit entsprechenden druckabhängigen Ventilanordnungen versehen. Solche Ventilanordnungen sind normalerweise geschlossen, öffnen jedoch, wenn in dem Tank oder der sonstigen Anlage ein gewisser Überdruck oder auch ein gewisser Unterdruck herrscht. Dabei ist die Druckschwelle für den Unterdruck meist deutlich niedriger als die Druckschwelle für den Überdruck, weil insbesondere großvolumige Tankanlagen nur geringe Unterdrücke vertragen.

Aus der US 2020/0271234 A1 sowie der WO 2018/ 211 266 A1 ist eine druckabhängige Ventilanordnung bekannt, die zwei in einem gemeinsamen Gehäuse angeordnete Ventile aufweist, von denen eines als Saugventil und das andere als Druckventil ausgebildet ist. In einer ersten Ausführungsform sind die beiden Ventile axial übereinanderliegend angeordnet, wobei das Saugventil einen größeren Ventilteller aufweist als das Druckventil. Beide Ventile sind jeweils mit einem Gewicht versehen, um eine definierte Schließkraft einzustellen. Das Saugventil ist oberhalb des Druckventils angeordnet. Deswegen ist der Zugang zu dem Druckventil erschwert, was insbesondere Schwierigkeiten bereiten kann, wenn die Schließkraft für das Druckventil durch Anpassung des Gewichts verstellt werden soll.

Aus den gleichen Druckschriften geht eine alternative Ausführungsform der Ventilanordnung hervor, die ein einziges Druckventil und mehrere Saugventile umfasst, die in einem Teilgehäuse innerhalb des Ventilgehäuses um das Druckventil herum angeordnet sind. Zwar sind die Ventilteller der Saugventile kleiner als der Ventilteller des Druckventils, jedoch bieten sie in ihrer Gesamtheit einen großen Strömungsquerschnitt, sodass, wenn sie alle öffnen, ein effizienter Abbau eines vorhandenen Unterdrucks erreicht werden soll.

Eine weitere Ventilanordnung mit mehreren Saugventilen ist aus der WO 97/48926 bekannt.

Je nach Anwendungsfall, können solche druckabhängigen Ventilanordnungen unterschiedlichen Anforderungen unterliegen. Eine gemeinsame Anforderung ist ein geringer Strömungswiderstand sowohl beim Gasauslass infolge Überdrucks, als auch, insbesondere beim Gaseinlass, infolge Unterdrucks. Eine weitere allen Einsatzfällen gemeinsame Anforderung ist der Wunsch nach möglichst absoluter Zuverlässigkeit, um jedenfalls Schäden an Tanks oder sonstigen Anlagenteilen durch unzulässige Überdrücke oder Unterdrücke auszuschließen. Bei einigen Anwendungen kann es zudem darauf ankommen, einen zeitweiligen oder dauerhaften Abbrand von ausgelassenen brennbaren Gasen zu ermöglichen, ohne dass eine an der Ventilanordnung brennende Flamme Schäden an der Ventilanordnung verursacht.

Die erfindungsgemäße druckabhängige Ventilanordnung wird in verschiedenen Ausführungsformen wenigstens einigen der genannten Anforderungen gerecht.

Die erfindungsgemäße Ventilanordnung weist ein Ventilgehäuse auf, das einen nach unten abgehenden Systemanschluss zum Anschluss an ein System aufweist. Das System kann eine oder mehrere Leitungen sowie einen oder mehreren Tanks umfassen, in denen zum Beispiel brennbare oder unbrennbare Flüssigkeiten vorhanden sind. Insbesondere kann es sich dabei um einen Brennstofftank, einen Wassertank oder einen Tank für andere Flüssigkeiten mit wechselndem Füllstand handeln. Der nach unten abgehende Systemanschluss ermöglicht die Montage der Ventilanordnung auf einem Tank. Das Volumen des Tanks kann, anders als bei Ventilanordnungen mit seitlichem Systemanschluss, vollständig mit Flüssigkeit gefüllt werden. Die ermöglicht es in vielen Fällen, mit einem relativ kleinen Tankvolumen auszukommen. Enthält dieser Tank brennbare Flüssigkeit, die brennbare Gase (Dampf) absondert, und besteht die Gefahr der Entflammung von aus der Ventilanordnung austretenden Gasen, können diese Gase gefahrlos oberhalb der Ventilanordnung abbrennen.

Oberhalb des in dem Tank oder sonstigen Gefäßes vorhandenen Flüssigkeitsspiegel sind Luft und/oder aus der Flüssigkeit hervorgehender Dampf vorhanden, dessen Druck einen gewissen Überdruck gegenüber der Umgebung nicht überschreiten und einen vorgegebenen Unterdruck gegenüber der Umgebung nicht unterschreiten soll. Dazu sind in dem Ventilgehäuse ein Saugventil und ein Druckventil angeordnet. In dem Gehäuse ist dazu ein Teilvolumen abgegrenzt, das eine in das Gehäuse hinein entlüftende Auslassöffnung und eine aus dem Gehäuse ansaugende Einlassöffnung mit entsprechenden darin angeordneten Ventilen (Saugventil und Druckventil) aufweist.

Erfindungsgemäß erstreckt sich das Teilvolumen lateral nach nur einer Seite des Druckventils, wobei in dem sich von dem Druckventil weg erstreckendes Teil nur ein einziges neben dem Druckventil angeordnetes Saugventil angeordnet ist. Dieses Grundkonzept ermöglicht die Aufteilung der Ventilanordnung in Baugruppen, die eine leichte Anpassung der Ventilanordnung an unterschiedliche Aufgaben ermöglicht. Beispielsweise können an dem seitlich von dem Systemanschluss weg ragenden Gehäuse ein oder mehrere, den Gehäuseinnenraum mit der Umgebung verbindende Öffnungen angeordnet sein. Diese Öffnungen können an der Gehäuseoberseite und/oder an der Gehäuseunterseite angeordnet sein.

Soll das System unbrennbare Flüssigkeiten, wie zum Beispiel Wasser, enthalten, können an der Öffnung oder den Öffnungen Regen- und/oder Insektenschutzvorrichtungen vorgesehen sein. Als Insektenschutzvorrichtung kann ein engmaschiges Sieb dienen. Enthält das System brennbare Flüssigkeiten können an den Öffnungen zusätzlich Flammensperren vorgesehen sein. Unabhängig davon ist der Platz oberhalb des Druckventils zur bedarfsweisen Anordnung einer Federstelleinrichtung zur Einstellung der Öffnungskraft des Druckventils und somit der Druckschwelle für das Öffnen des Druckventils frei.

Das Konzept führt auch zu einem relativ kleinvolumigen Gehäuse, sodass etwaige in dem Gehäuse anfallende Kondensatmengen gering bleiben. Dies kann insbesondere beim Einsatz an Tanks Bedeutung haben, die brennbare Flüssigkeiten enthalten und die einer gewissen Brandgefahr unterliegen. Ist die Öffnung zur Umgebung oben angebracht, kann dort oberhalb einer Flammensperre eine Flamme brennen, ohne dass das Gehäuse davon beschädigt wird. Etwaiges in dem Gehäuse gesammeltes Kondensat kann unten über einen mit Flammensperre versehenen Kondensatauslass ablaufen und dort notfalls abbrennen. Weil jedoch der Gehäuseinnenraum und somit auch die anfallende Kondensatmenge gering ist, kann eine solche Flamme nur kurzzeitig unterhalten werden, sodass Schäden ausgeschlossen werden können. Aufgrund der Gestaltung ist die Ventilanordnung grundsätzlichen fähig, bei entsprechender Auslegung eine Kurzzeitbrandzulassung oder auch eine Dauerbrandzulassung zu erhalten. Dabei ist es vorteilhaft, wenn der Systemanschluss unten (vertikal abgehend) angeordnet ist, weil dadurch das Tankvolumen klein gehalten werden kann.

Dabei ist es zweckmäßig, dass die dem Gasauslass dienende, mit einer Flammendurchschlagsicherung versehene Öffnung seitlich gegen das Druckventil versetzt angeordnet ist, so dass sich ein S-förmiger Strömungsweg (d.h. ein Strömungsweg mit zwei einander entgegengesetzten Biegungen) für das ausströmende Gas ergibt. Durch den daraus resultierenden großen Abstand zwischen der Flammendurchschlagsicherung und dem Druckventil bei gleichzeitig kompaktem Gehäuse ist der Wärmeeintrag in das Druckventil auch im Dauerbrandfall gering, so dass der Ventilsitz desselben auch aus einem Kunststoff ausgebildet werden kann. Ein Dauerbrand auf der oberen Öffnung verursacht dann kein Schaden an der Ventilanordnung.

Das Saugventil und das Druckventil kommunizieren beide gemeinsam mit dem gleichen Gehäuseinnenraum. Deswegen benötigt die Ventilanordnung in dieser Ausführungsform lediglich eine einzige große, d.h. für den nötigen Dampf- oder Gasstrom ausgelegte Flammendurchschlagsicherung. Diese schützt vor Flammendurchschlag sowohl bei auswärts als auch bei einwärts gehendem Gas- oder Luftstrom. Diese Flammendurchschlagsicherung ist vorzugsweise an einem von dem Gehäuse nach oben abgehenden Stutzen angeordnet. Dadurch kann sichergestellt werden, dass eine oberhalb der Flammendurchschlagsicherung brennende Flamme weder den Tank noch das Gehäuse der Ventilanordnung dauerhaft berührt.

Wird die erfindungsgemäße Ventilanordnung hingegen an einem Tank für wässrige Flüssigkeiten eingesetzt, kann austretender Dampf insbesondere bei niedrigen Umgebungstemperaturen ebenfalls zur Kondensatbildung und schlimmstenfalls auch zur Eisbildung führen. Anfallendes Kondensat kann aber durch eine zweite, am Gehäuseboden vorgesehene Öffnung ablaufen. Sich bildendes Eis kann jedenfalls aber nicht die obere zur Umgebung führende Öffnung verstopfen. Dies trägt zur Zuverlässigkeit der Ventilanordnung in einem außerordentlich weiten Einsatzspektrum bei.

Ein weiteres Merkmal der erfindungsgemäßen Ventilanordnung liegt darin, dass sie nur ein einziges Saugventil umfasst. Dieses ist von seinem Strömungsquerschnitt her so dimensioniert, dass es in Offenstellung die notwendige Luftmenge mit ausreichend geringem Strömungswiderstand durchströmen lässt. Hierbei hat die Nutzung eines einzigen Saugventils gegenüber der Nutzung mehrerer parallel angeordneter Saugventile den Vorzug einer definierten Öffnungsschwelle und sogleich einer geringeren Ausfallwahrscheinlichkeit für sich. Das Verhältnis zwischen freiem Strömungsquerschnitt und Umfang des Ventilsitzes ist bei gegebenem Strömungsquerschnitt bei einem einzigen Saugventil größer als bei mehreren parallelen Saugventilen gleich mit in der Summe gleichem Strömungsquerschnitt.

Bei Anordnungen mit mehreren Saugventilen kann es dazu kommen, dass nach dem Öffnen eines ersten Saugventils ein Druckabfall eintritt, der das Öffnen der weiteren Saugventile hemmt. Ist lediglich ein Saugventil offen, kann sich ein erhöhter Strömungswiderstand und somit ein verzögerter Abbau des Unterdrucks ergeben. Dagegen ist bei der Erfindung die Gefahr des nicht vollständigen Öffnens des Saugventils und oder des verzögerten (Unter-)Druckabbaus geringer als bei Mehrventilanordnungen gemäß dem Stand der Technik.

Außerdem ist die Wahrscheinlichkeit des Hängenbleibens des einzigen Saugventils in Schließstellung z.B. durch Festkleben oder Festfrieren gegenüber der Verwendung mehrerer Saugventile vermindert. Bei Aufteilung des nötigen Strömungsquerschnitts auf mehrere Saugventile ist das Verhältnis aus der Länge der Linienberührung zwischen den Ventilsitzen zu der aufsummierten Fläche der Ventilteller vergrößert. Damit ist das Verhältnis der durch die Druckdifferenz erzeugten Öffnungskraft zu einer eventuell am Ventilsitz auftretendem Haftkraft bei der Erfindung verbessert.

Wenn die zur Umgebung gehende Öffnung an der Unterseite des Ventilgehäuses seitlich neben dem Systemanschluss angeordnet ist, ist sie zum einen regengeschützt und zum anderen direkt unter dem Saugventil angeordnet, sodass sich für den Saugvorgang ein besonders geringer Strömungswiederstand darstellt.

Ist eine zur Umgebung gehende Öffnung hingegen an der Oberseite des Ventilgehäuses angeordnet, ist dies vorteilhaft im Hinblick auf den Austritt brennender Gase, die dann oberhalb des Ventilgehäuses abbrennen können, ohne Schaden anzurichten. Dies gilt insbesondere in Verbindung mit dem oben genannten seitlichen Versatz der oberen (Aus-lass-)Öffnung gegen den unten angeordneten Tankanschluss.

Es ist auch beides möglich, d.h. sowohl eine zur Umgebung gehende Öffnung an der Oberseite des Gehäuses, als auch eine zur Umgebung gehende Öffnung an der Unterseite des Gehäuses vorzusehen. Bedarfsweise können beide Öffnungen mit Flammensperren versehen sein. Die unten angeordnete Öffnung kann dann als Kondensatauslass dienen, während die oben angeordnete Öffnung als Gasauslass dient und Lufteinlass dient. In diesem Fall ist die untere Öffnung deutlich kleiner als die obere Öffnung. Der Durchmesser der unteren Öffnung kann beispielsweise kleiner als die Hälfte oder kleiner als ein Drittel des Durchmessers der oberen Öffnung sein.

Durch den seitlichen Versatz wenigstens der oberen Öffnung gegen das Druckventil kann oberhalb des Druckventils eine Stelleinrichtung zur Verstellung der Druckschwelle für das Öffnen des Auslassventils angeordnet sein. Eine solche Stelleinrichtung kann auswechselbare Gewichte oder eine Feder enthalten. Der Feder kann ein verstellbares Widerlager zugeordnet sein, mit dem die Schließkraft des Druckventils eingestellt werden kann. Der Zugang zu dieser Stelleinrichtung ist dann für geeignetes Servicepersonal unmittelbar und ohne Schwierigkeiten gegeben, weil oberhalb des Druckventils keine anderen Einrichtungen vorgesehen sind.

Vorzugsweise ist der Ventilteller des Saugventils so groß wie, oder größer als, der Ventilteller des Druckventils. Damit kann eine besonders niedrige Unterdruckschwelle für das Öffnen in Folge Unterdrucks eingestellt werden. Auch wird das Risiko der Verschiebung der Unterdruckschwelle infolge von Haftung des Ventiltellers am Ventilsitz gemindert.

Weitere Einzelheiten von Ausführungsformen der Erfindung sind Gegenstand von Unteransprüchen und/oder ergeben sich aus den Figuren, der Zeichnung sowie der nachfolgenden Beschreibung. In der Zeichnung zeigen:
Figur 1 eine erfindungsgemäße Ventilanordnung, in perspektivischer Übersichtsdarstellung,
Figur 2 die Ventilanordnung nach Figur 1, in vertikalgeschnittener Darstellung,
Figur 3 eine abgewandelte Ausführungsform der erfindungsgemäßen Ventilanordnung, in perspektivischer Übersichtsdarstellung,
Figur 4 die Ventilanordnung nach Figur 3, in vertikalgeschnittener Darstellung,
Figur 5 eine weiter abgewandelte Ausführungsform der erfindungsgemäßen Ventilanordnung und
Figur 6 die Ventilanordnung nach Figur 5, in vertikalgeschnittener Darstellung.

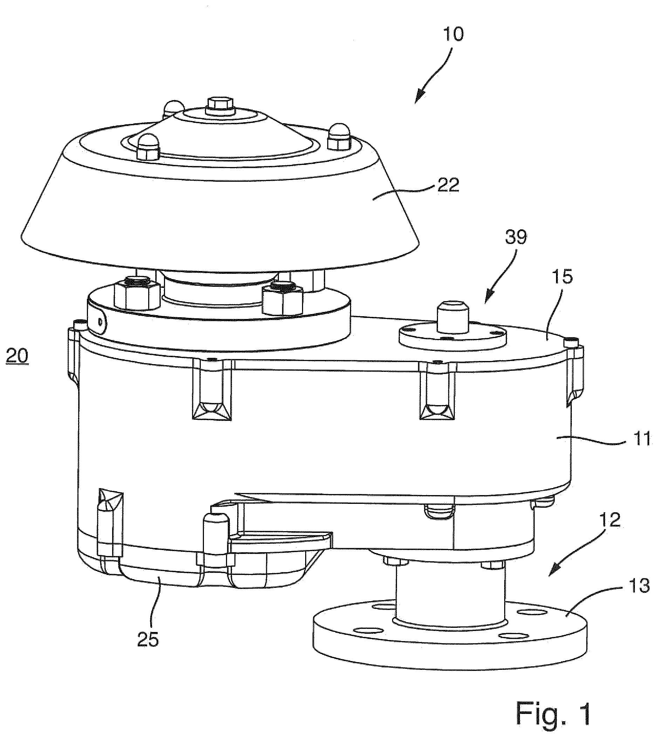

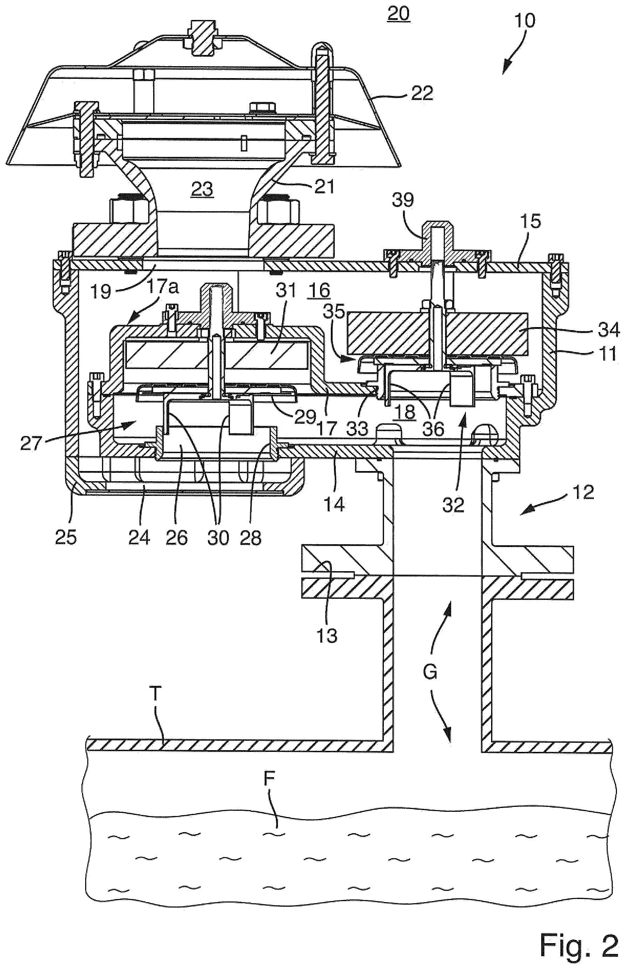

In Figur 1 und in Figur 2 ist eine druckabhängige Ventilanordnung 10 veranschaulicht, die als Druckausgleichsventil an einem System, insbesondere einer Leitung oder einem Gefäß, beispielsweise einem Tank T, angeordnet sein kann. Das System kann Gas, Dampf oder Luft enthalten und wechselnden Drücken ausgesetzt sein. Solche wechselnden Drücke können sich z.B. ergeben, wenn sich die Temperatur in dem System ändert oder wenn, z.B. durch wechselnde Befüllung mit Flüssigkeit F, Gas G in das System ein- oder ausströmen muss.

Die Ventilanordnung 10 nach Figur 1 ist für einen Tank T für unbrennbare Flüssigkeiten ausgelegt und weist insoweit keine Flammensperren oder dergleichen auf. An ihrem Gehäuse 11 ist unten ein Systemanschluss 12 angeordnet, der beispielsweise mit einem Flansch 13 versehen sein kann, um die Ventilanordnung 10 an einem nicht weiter veranschaulichten Leitungssystem oder dem Tank T zu befestigen. Der Flansch 13 kann nach einer üblichen Norm, z.B. nach DIN, ANSI, JIS oder GOST ausgebildet sein.

Wie ersichtlich, weist das Gehäuse 11 einen Boden 14 und in einem Abstand darüber einen Gehäusedeckel 15 auf und umschließt so einen Innenraum 16. Der Gehäusedeckel 15 ist vorzugsweise eine ebene Platte, die mit ihrem Rand auf einem an dem oberen Ende des Gehäuses 11 ausgebildeten ringförmigen, vorzugsweise ebenen Sitz aufliegt und dort mit dem Gehäuse 11 z.B. mittels Schrauben verbunden ist.

In dem Innenraum 16 ist eine Trennwand 17 angeordnet, die in dem Innenraum 16 ein Teilvolumen 18 abgrenzt. Die Trennwand 17 ist durch eine Platte mit einem von ihr aufragenden Dom 17a ausgebildet, wobei die Platte mit ihrem Rand auf einem in dem Gehäuse 11 ausgebildeten ringförmigen, vorzugsweise ebenen Sitz aufliegt und dort mit dem Gehäuse 11 z.B. mittels Schrauben gesichert ist.

Das Teilvolumen 18 kommuniziert mit dem Systemanschluss 12 wohingegen der Innenraum 16 über eine oben in dem Gehäusedeckel 15 angeordnete unverschlossene Öffnung 19 mit der Umgebung 20 in Verbindung steht. Unverschlossen ist die Öffnung in dem Sinne, dass durch sie jederzeit Gas in die den Innenraum 16 eintreten und aus diesem austreten kann. Der in dem Tank T anstehende Druck liegt lediglich in dem Teilraum 18, nicht aber in dem Innenraum 16 an.

An der Öffnung 19 kann ein Stutzen 21 angeordnet sein, der eine Regenhaube 22 tragen oder unter einem Schutzdach angeordnet sein kann. Durch den Stutzen 21 führt ein Kanal 23, der bedarfsweise mit einer Insektensperre versehen sein kann. Durch einen ringförmigen Übertritt zwischen der Umgebung und dem oberen Ende des Stutzens 23 kann immer Luft ein- und ausströmen und über den Stutzen 23 in den Innenraum 16 oder aus diesem heraus gelangen.

An dem Boden 14 kann ein mit einer weiteren Öffnung 24 versehener Deckel 25 vorgesehen sein. Dieser ist vorzugsweise so angeordnet und ausgebildet, dass sowohl der Innenraum 16, als auch eine in das Teilvolumen 18 führende Saugöffnung 26 mit der Umgebung 20 kommunizieren. Die Öffnung 24 ist bei dieser Ausführungsform vorzugsweise größer als die Saugöffnung 26. Die Ventilanordnung weist nur eine einzige Saugöffnung und nur ein einziges Saugventil 27 auf. Auch die Öffnung 24 ist vorzugsweise permanent offen, d.h. unverschlossen. Damit kann in jedem Betriebszustand der Ventilanordnung Luft oder Gas über die Öffnung 24 in den Innenraum 16 eintreten oder aus diesem austreten.

Der Deckel 25 ist in diesem Ausführungsbeispiel optional und kann auch entfallen. Er bietet aber die Möglichkeit, in der Öffnung 24 ein Insektengitter oder andere Schutzvorrichtungen anzuordnen, um eine Besiedelung durch Insekten zu verhindern, was der langfristigen ordnungsgemä-ßen Funktion der Ventilanordnung 10 zugutekommt.

An der Saugöffnung 26 ist ein Saugventil 27 angeordnet, zu dem ein die Saugöffnung 26 umgrenzender Ventilsitz 28 in Gestalt eines die Saugöffnung 26 umgebenden Rings und ein Ventilteller 29 gehören, der vertikal auf den Ventilsitz 28 hin und von diesem wegbewegbar ist. Der Ventilsitz 28 kann aus Metall oder einem geeigneten Kunststoff, z.B. PTFE bestehen. Er kann in dem Ventilgehäuse 11 austauschbar angeordnet und dazu z.B. in dieses eingeschraubt sein. In Figur 2 ist das Saugventil 27 in Offenstellung dargestellt, in der der Ventilteller 29 von dem Ventilsitz 28 nach oben abgehoben ist. Von dem Ventilteller 29 erstrecken sich wenigstens drei Finger 30 nach unten mit etwas Spiel in die Saugöffnung 28 hinein und bewirken so eine Zentrierung des Ventiltellers 29.

Um den Ventilteller 29 in Richtung auf den Ventilsitz 28 hin vorzuspannen, ist an dem Ventilteller 29 ein Gewicht 31, beispielsweise in Gestalt einer Metallscheibe, gehalten, die an einem zentralen von dem Ventilteller 29 aufragenden Stift sitzt. Der Stift kann mit Spiel in einer Gleitführung sitzen und so zur Zentrierung des Ventiltellers 29 beitragen. Durch Auswechseln des Gewichts 31 gegen ein Gewicht 31 mit anderer Größe kann eine Anpassung an unterschiedliche Unterdruckschwellen vorgenommen werden.

In Offenstellung befindet sich das Gewicht 31 innerhalb des an der Trennwand 17 vorgesehenen Doms 17a, wobei der Ventilteller 29 in dieser Position im Wesentlichen glatt mit dem übrigen horizontalen Teil der Trennwand 17 abschließt. Auf diese Weise bildet das Teilvolumen 18 einen glatten von der Saugöffnung 26 zu dem Systemanschluss 12 führenden Kanal mit geringem Strömungswiderstand.

An der Trennwand 17 ist außerdem ein Druckventil 32 vorzugsweise direkt oberhalb des Systemanschlusses 12 vorgesehen, das dazu dient, unter (geringem) Überdruck stehende, von dem Systemanschluss 12 herkommende Gase aus dem Teilvolumen 18 in den Innenraum 16 und aus diesem in die Umgebung austreten zu lassen. Zu dem Druckventil 32 gehört ein in der Oberseite der Trennwand 17 angeordneter ringförmiger Ventilsitz 33, dem ein mit einem scheibenförmigen Gewicht 34 belasteter Ventilteller 35 zugeordnet ist. Der Ventilsitz 33 kann aus Metall oder einem geeigneten Kunststoff, z.B. PTFE bestehen. Er kann in der Trennwand 17 austauschbar angeordnet und dazu z.B. in dieses eingeschraubt sein.

Der Ventilteller 35 ist vertikal auf und ab bewegbar und ruht unter der Last des Gewichts 34 auf dem Ventilsitz 33. Von dem Ventilteller 35 erstrecken sich drei oder mehrere Fortsätze 36 in den Ventilsitz 33, um dort mit etwas seitlichem Spiel den Ventilteller 35 zentriert zu führen. Von dem Ventilteller 35 erstreckt sich außerdem ein Stößel in eine obere Führung, in der er mit Spiel geführt ist.

Der Ventilteller 29 sowie der Ventilteller 35 kann jeweils aus einem Kunststoff oder bedarfsweise auch aus einem Metall gefertigt sein und abdichtend auf dem jeweiligen Ventilsitz 28, 33 aufsitzen. Zur Unterstützung der Dichtwirkung kann an dem jeweiligen Ventilteller 29, 35 eine Dichtung, eine Dichtungsfolie oder dergleichen vorgesehen sein, beispielsweise aus einem Kunststoff, wie zum Beispiel FEP oder PTFE. Dies ist insbesondere sinnvoll, wenn der jeweilige Ventilteller 29, 35 aus einem Metall besteht.

Die Ventilsitze 28, 33 können einen gleichen Durchmesser oder auch unterschiedliche Durchmesser aufweisen. Im letzteren Fall ist der Ventilsitz 28 vorzugsweise größer als der Ventilsitz 33. Außerdem kann das Gewicht 31 geringer als das Gewicht 34 sein, um eine niedrigere Druckdifferenz für das Öffnen des (einzigen) Saugventils im Vergleich zu der Druckdifferenz für das Öffnen des Druckventils festzulegen.

Für die nachfolgende Beschreibung der Funktion der Ventilanordnung 10 wird davon ausgegangen, dass diese an einem Behälter, beispielsweise einem größeren Wassertank (Tank T), befestigt ist, der zunächst leer ist. Die Ventilanordnung 10 ist dabei mit einem Stutzen an der Oberseite des Tanks T verbunden. Wird der Tank T nun mit Wasser gefüllt, wird das vorhandene Luftpolster verdrängt, sodass in dem Tank T ein leichter Überdruck entsteht. Ist dieser ausreichend groß, um den Ventilteller 35 von seinem Ventilsitz 33 abzuheben, öffnet das Druckventil 32 und Luft G kann von dem Systemanschluss 12 direkt durch das Druckventil 32 in den Innenraum 16 und aus diesem in die Umgebung 20 hinausströmen. Die Luft kann dabei vorzugsweise den Weg durch die Öffnung 19 und den Stutzen 23 sowie ergänzend auch durch die Öffnung 24 nehmen.

Wird der Tank hingegen geleert, muss, um das Leeren des Tanks T nicht zu behindern und den Tank T nicht zu beschädigen, Luft in den Tank T einströmen können. Ab einem bestimmten Unterdruck ist die Druckdifferenz an dem Saugventil 27 groß genug, dass der Ventilteller 29 von dem Ventilsitz 28 abhebt. Es kann nun Umgebungsluft direkt durch die Öffnung 24, das Saugventil 27, das Teilvolumen 18 und den Systemanschluss 12 in den Tank T nachströmen. Die kinetische Energie des auf den Ventilteller 29 auftreffenden und an diesem umgelenkten Luftstroms hält das Saugventil 27 offen, bis ein ausreichender Druckausgleich erreicht ist.

Findet in dem Tank T kein Füll- oder Leervorgang und auch keine Temperaturänderung statt, entsteht kein Differenzdruck zur Umgebung. In diesem Fall bleiben sowohl das Saugventil 27, als auch das Druckventil 32 geschlossen.

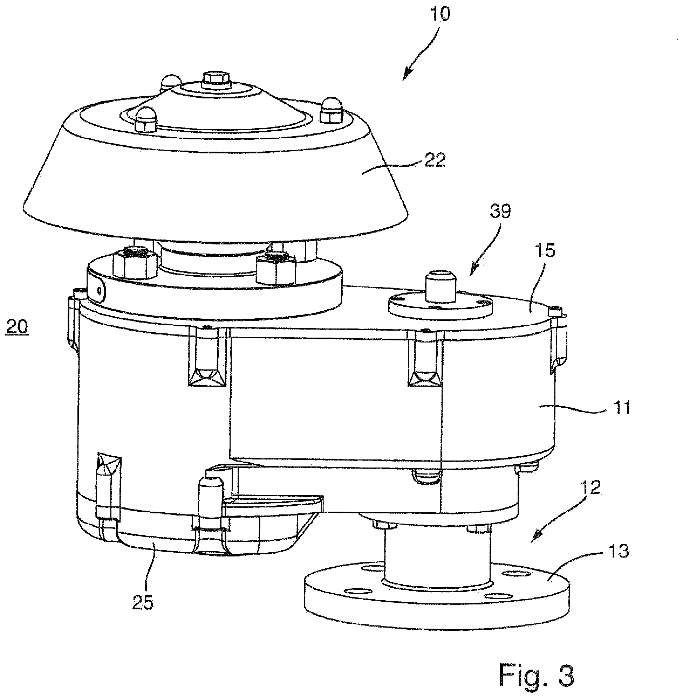

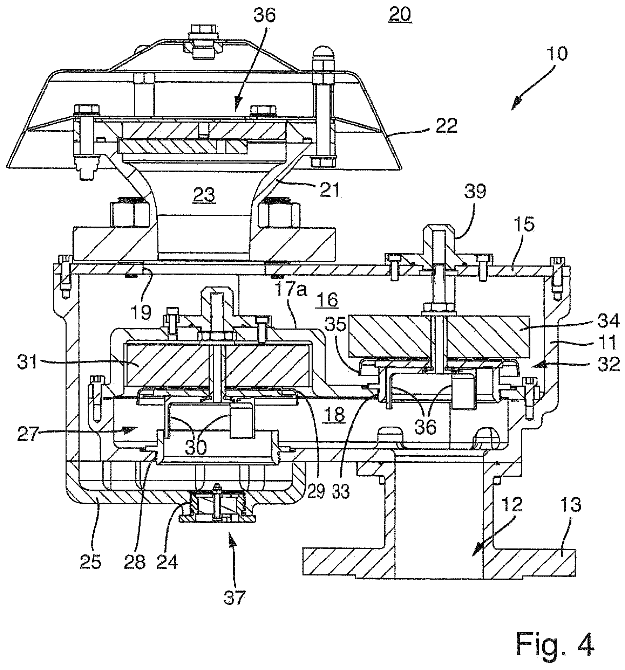

Figur 3 veranschaulicht eine abgewandelte Ausführungsform der erfindungsgemäßen Ventilanordnung 10, zu deren Beschreibung unter Zugrundelegung der bereits eingeführten Bezugszeigen auf die Ventilanordnung 10 nach den Figuren 1 und 2 verwiesen wird. Im Unterschied zu der vorbeschriebenen Ventilanordnung 10 jedoch ist die Ventilanordnung 10 nach Figur 3 und 4 zur Be- und Entlüftung von Anlagen, insbesondere Tanks T für brennbare Flüssigkeiten vorgesehen. Die entstehenden Dämpfe werden in die Umgebung entlassen. Bei Volumendefiziten kann Luft von außen nachströmen. Jedoch weist die Ventilanordnung 10, wie Figur 4 erkennen lässt, zum Schutz von Flammenüberschlägen von der Umgebung in den Tankbereich hinein an dem Stutzen 21 oben eine Flammensperranordnung 36, beispielsweise in Gestalt mehrerer im Abstand zueinander angeordneter Lochplatten, auf. Außerdem kann bedarfsweise an dem unten angeordneten Deckel 25 eine wesentlich kleinere Öffnung 24 vorgesehen sein, in der ebenfalls eine Flammensperre 37 angeordnet ist. Die Öffnung 24 und die Flammensperre 37 dienen hier als Kondensatauslass. Hinsichtlich des Öffnens und Schließens der Ventile 27 und 34, sowie auch zur sonstigen Funktion der Ventilanordnung 10 gilt die vorige Beschreibung entsprechend. Zusätzlich gilt folgendes:

Beim Füllen eines angeschlossenen Tanks T mit brennbarer Flüssigkeit, wie beispielsweise Benzin oder dergleichen, können Dämpfe und Gase über das Druckventil 34 durch das Druckventil 32 in den Innenraum 16 und aus diesem vorwiegend über den Stutzen 21 und die Flammensperre 36 nach außen treten. Entsprechend der Temperatur der Ventilanordnung 10, die beispielsweise bei geringen Außentemperaturen kleiner als die Temperatur des angeschlossenen sonstigen Systems sein kann, kann sich in dem Innenraum 16 brennbares Kondensat bilden. Die kompakte Bauform der erfindungsgemäßen Ventilanordnung 10 beschränkt jedoch den Innenraum 16 auf ein geringes Maß, sodass die anfallende Kondensatmenge, die letztendlich über die Flammensperre 37 austritt, gering ist. Während große Gasmengen über die Flammensperranordnung 36 nach außen austreten können, tritt somit an der Unterseite des Gehäuses 11 lediglich eine geringe Kondensatmenge und/oder auch eine geringe Dampfmenge aus. Sollte es zu einer Zündung der austretenden Gase und Dämpfe kommen, können diese oberhalb des Stutzens 21 abbrennen. Dabei ist auch längerdauernder Brand (Dauerbrand) möglich. Die geringe an der Flammensperre 37 ausgetretene Kondensatmenge ist hingegen schnell abgebrannt, sodass Flammen dort nach kurzer Zeit erlöschen und eine Beschädigung der Ventilanordnung 10 von daher nicht zu erwarten ist. Außerdem kann die oben abbrennende Flamme einen Sog erzeugen, der an der Öffnung 24 keine weiteren Dämpfe austreten lässt. Dieser Effekt kann zur Sicherheit im Brandfall beitragen.

Der Ventilteller 29 sowie der Ventilteller 35 können bei allen Ausführungsformen den gleichen bauartbedingt begrenzten Ventilhub aufweisen. Unabhängig umschließt das Gehäuse 11 (einschließlich der Deckel 15, 25) das Saugventil 27 und das Druckventil 32, so dass, insbesondere bei schnell aufeinanderfolgenden Druckwechseln, der Innenraum 16 als Zwischenpuffer für Kraft- oder Brennstoffdampf dienen kann, der dann nicht oder nur vermindert in die Umgebung geht.

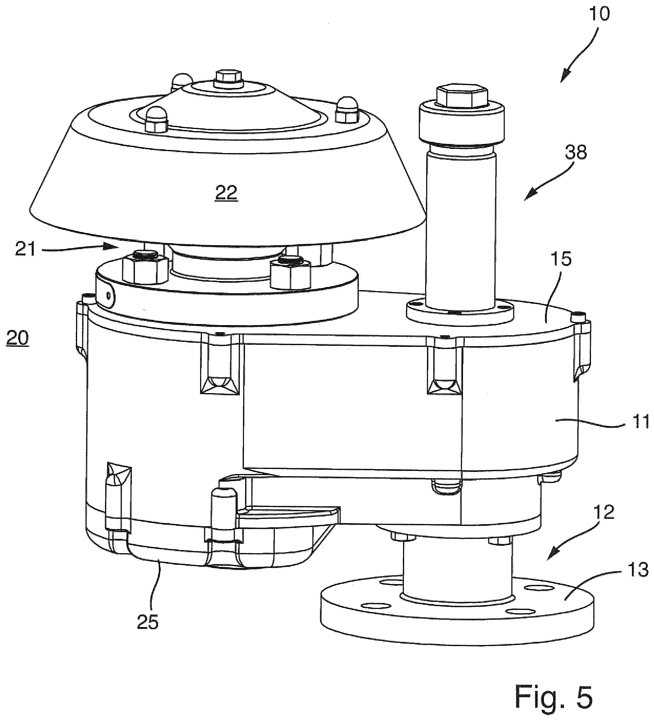

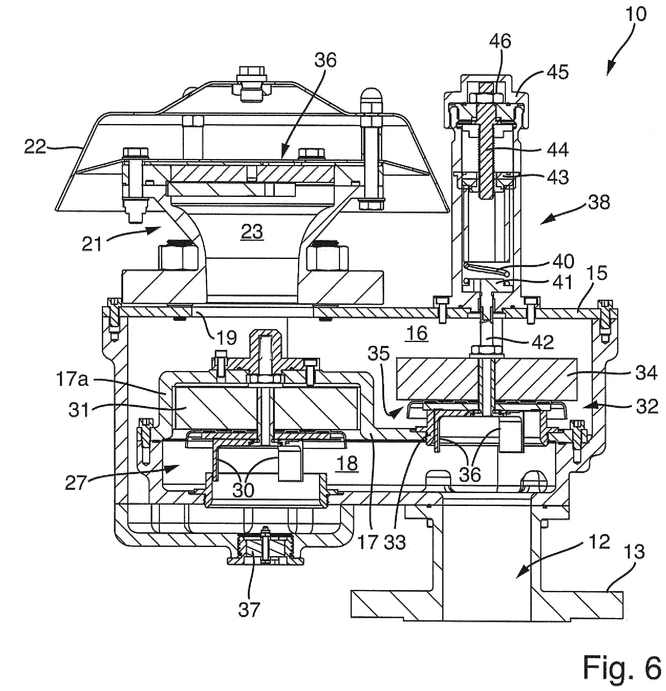

Die Figuren 5 und 6 veranschaulichen eine weiter abgewandelte, hier auf der Ausführungsform nach Figur 3 und 4 beruhende Ventilanordnung. Diese weist die schon diskutierten Flammensperren 37 und 36 auf. Im Fall einer Anwendung an Tanks T für nicht brennbare Flüssigkeiten, wie Wasser, können die Flammensperren 36, 37 jedoch auch entfallen. Es gilt deswegen die Beschreibung nach den Figuren 1 bis 4 entsprechend.

Anders als bei den vorstehend beschriebenen Ausführungsformen ist bei der Ventilanordnung 10 nach Figur 5 und 6 das Druckventil 32 nicht nur durch das Gewicht 34, sondern allein oder zusätzlich durch eine Stelleinrichtung 38 in Schließstellung vorgespannt. Die Stelleinrichtung 38 sitzt oben auf dem Gehäusedeckel 15, vorzugsweise mittig oberhalb des Ventiltellers 35. Dazu weist der Gehäusedeckel 15 eine Öffnung auf, die bei den vorigen Ausführungsformen mit einem Blinddeckel 39 verschlossen war. Dieser ist nun durch die Stelleinrichtung 38 ersetzt, die an den Gehäusedeckel 15 angeflanscht ist und neben dem Stutzen 21 nach oben aufragt. Die Stelleinrichtung 38 besteht aus einem Rohrkörper, in dem eine Feder 40 angeordnet ist. Die Feder 40 stützt sich mit ihrem unteren Ende über einen Federsitz 41 und einen Stößel 42 an dem Ventilteller 35 ab. Mit ihrem anderen Ende ist die Feder 40 an einer Druckscheibe 43 abgestützt, deren Höhe über eine Schraubspindel 44 verstellbar ist. Zur Sicherung der Schraubspindel 44 gegen Verdrehung kann eine unter einer Schutzhaube 45 angeordnete Mutter 46 dienen.

Hinsichtlich der Arbeitsweise und Funktion dieser Ventilanordnung 10 gilt die Beschreibung der Ventilanordnungen der Figuren 1 bis 4 mit dem Unterschied, dass die Druckschwelle für das Öffnen des Druckventils 32 nicht allein von dem Gewicht 34, sondern zusätzlich von der Feder 40 und deren Einstellung an der Schraubspindel 44 bestimmt wird.

Die in den vorigen Ausführungsbeispielen veranschaulichten Ventilanordnungen 10 basieren auf einem Baukastensystem, das immer das asymmetrische Gehäuse 11, den zugehörigen Gehäusedeckel 15, die Trennwand 17 sowie das Saugventil 27 und das Druckventil 32 umfasst. In Fällen, in denen nur eine Gasströmungsrichtung erforderlich ist, können das Saugventil 27 oder das Druckventil 32 auch entfallen. In diesem Fall wird das jeweils nicht benötigte Ventil mit einem Blinddeckel verschlossen.

An der Ventilanordnung 10 können ergänzend immer der Systemanschluss 12 und der Stutzen 21 vorgesehen sein. Beides kann zu dem Baukastensystem gehören. In Anpassung an jeweils gewünschte Anwendungsfälle kann jedoch der untere Gehäusedeckel 25 in zwei oder mehreren verschiedenen Ausführungsformen bereitgestellt und bedarfsweise mit dem Gehäuse 11 verbunden werden. Das Baukastensystem kann wenigstens einige der verschieden ausgeführten Gehäusedeckel 25 umfassen. Ebenso können bedarfsweise die Flammensperren 36, 37 zu dem Baukastensystem gehören sowie vorgesehen oder weggelassen werden. Gleiches gilt für Insektenschutzgitter an den Öffnungen 19, 24 oder den an den Flammensperren 36, 37. Weiter kann zu dem Baukastensystem die Stelleinrichtung 38 gehören, die bedarfsweise vorgesehen oder eben auch durch den Blinddeckel 39 ersetzt werden kann.

Mit diesen geringen Modifikationen lässt sich die Ventilanordnung 10 an verschiedene Gegebenheiten anpassen, wobei immer wesentliche Voraussetzungen für den Einsatz erfüllt sind. Die Ventilanordnung 10 baut klein und kompakt, hat ein geringes Gehäusevolumen und bietet gute Zugänglichkeit zu den Gewichten 31, 34 und dem Federapparat, falls Einstellungen vorzunehmen sind. Außerdem ist bedarfsweise eine gute Zugänglichkeit zu dem Saugventil 27 gegeben. Aufgrund des kleinen und kompakten Bau des Gehäuses und des daraus resultierenden kleinen Innenvolumens sind keine größeren Kondensatansammlungen zu befürchten. Außerdem weist die Ventilanordnung 10 insbesondere bei unten offener Auslegung einen besonders geringen Strömungswiderstand und zwar sowohl bei offenem Saugventil 27, als auch bei offenem Druckventil 32 auf. Dies trägt zum schnellen und sicheren Druckausgleich bei, auch wenn von der Ventilanordnung 10 kurzzeitig ein hoher Volumenstrom zu bewältigen ist.

Die erfindungsgemäße Ventilanordnung 10 beruht auf einem für vielfältigen Einsatz geeigneten Grundaufbau, der aufgrund des Vorhandenseins nur eines einzigen Saugventils 27 eine hohe Zuverlässigkeit beim Öffnen infolge Unterdruckes aufweist. Durch die Anordnung des Saugventils 27 und des Druckventils 32 nebeneinander auf gleicher Höhe ergibt sich außerdem ein sehr kompaktes Gehäuse 11 mit geringem Innenvolumen 16, wodurch sich eine geringe Kondensatanfälligkeit ergibt. Durch die lediglich geringe Kondensatanfälligkeit ist die Gefahr des Verklebens (z.B. durch Korrosion oder durch Vereisen), insbesondere dann gemindert, wenn das Einlassventil 27 langzeitig in Schließstellung verbleibt, beispielsweise in Situationen, bei denen die Ventile 27, 32 selten oder nie öffnen.

### Bezugszeichen:

- 10: Ventilanordnung
- T: Tank
- F: Flüssigkeit
- G: Gas/Luft
- 11: Ventilgehäuse
- 12: Systemanschluss
- 13: Flansch
- 14: Boden
- 15: Gehäusedeckel
- 16: Innenraum
- 17: Trennwand
- 17a: Dom
- 18: Teilvolumen
- 19: Öffnung
- 20: Umgebung
- 21: Stutzen
- 22: Regenhaube/ Wetterschutzhaube
- 23: Kanal
- 24: Öffnung
- 25: Deckel
- 26: Saugöffnung
- 27: Saugventil
- 28: Ventilsitz
- 29: Ventilteller
- 30: Fortsätze
- 31: Gewicht
- 32: Druckventil
- 33: Ventilsitz
- 34: Gewicht
- 35: Ventilteller
- 36: Flammensperranordnung
- 37: Flammensperre
- 38: Federapparat
- 39: Blinddeckel
- 40: Feder
- 41: Federsitz
- 42: Stößel
- 43: Druckscheibe
- 44: Schraubspindel
- 45: Schutzhaube
- 46: Mutter

## Patentansprüche

1. Druckabhängige Ventilanordnung (10),
mit einem Ventilgehäuse (11, 15, 25), das
an seiner Unterseite einen nach unten abgehenden Systemanschluss (12) zum Anschluss eines Gefäßes oder einer Leitung für ein brennbares Fluid und
mindestens eine zur Umgebung (20) gehende unverschlossene Öffnung (19, 24) aufweist,
mit einer in dem Ventilgehäuse (11, 15, 25) angeordneten Trennwand (17), die von dem Innenraum (16) ein Teilvolumen (18) abgrenzt, das mit dem Anschluss (12) fluidisch verbunden ist,
wobei zwischen dem Innenraum (16) und dem Teilvolumen (18) ein Saugventil (27) und/oder ein Druckventil (32) angeordnet sind,
**dadurch gekennzeichnet,**
**dass** sich die Trennwand (17) und das Teilvolumen (18) lateral nach nur einer Seite des Druckventils (32) erstreckend ausgebildet sind und
**dass** neben dem Druckventil (32) nur ein einziges Saugventil (27) angeordnet ist.

2. Ventilanordnung nach Anspruch 1, **dadurch gekennzeichnet, dass** die zur Umgebung gehende Öffnung (24) an der Unterseite des Ventilgehäuses (25) seitlich neben dem Systemanschluss (12) angeordnet ist.

3. Ventilanordnung nach Anspruch 1, **dadurch gekennzeichnet, dass** die zur Umgebung (20) gehende Öffnung (19) an der Oberseite (15) des Ventilgehäuses (11, 15, 25) angeordnet ist.

4. Ventilanordnung nach Anspruch 3, **dadurch gekennzeichnet, dass** die zur Umgebung (20) gehende Öffnung (19) an der Oberseite (15) des Ventilgehäuses (11, 15, 25) seitlich gegen den Systemanschluss (12) versetzt angeordnet ist.

5. Ventilanordnung nach einem der vorstehenden Ansprüche, **dadurch gekennzeichnet, dass** an jeder zu der Umgebung gehenden Öffnung (19, 24) eine Flammensperre (36, 37) angeordnet ist.

6. Ventilanordnung nach einem der vorstehenden Ansprüche, **dadurch gekennzeichnet, dass** die Flammensperre (26) oberhalb des Saugventils (27) und zugleich seitlich gegen das Druckventil (32) versetzt angeordnet ist.

7. Ventilanordnung nach einem der vorstehenden Ansprüche, **dadurch gekennzeichnet, dass** an dem Ventilgehäuse (11, 15, 25) neben der zur Umgebung (20) gehende Öffnung (19) eine Stelleinrichtung (38) angeordnet ist, die zur Verstellung einer Druckschwelle für das Öffnen des Auslassventils (32) eingerichtet ist.

8. Ventilanordnung nach einem der vorstehenden Ansprüche, **dadurch gekennzeichnet, dass** unterhalb des Saugventils (27) an dem Ventilgehäuse (11, 15, 25) ein Kondensatablass (27) angeordnet ist.

9. Ventilanordnung nach einem der vorstehenden Ansprüche, **dadurch gekennzeichnet, dass** das Saugventil (27) einen Ventilsitz (28) aufweist, der an der Unterseite des Gehäuses (11) angeordnet ist.

10. Ventilanordnung nach einem der vorstehenden Ansprüche, **dadurch gekennzeichnet, dass** die das Druckventil (32) eine Ventilsitz (33) aufweist, der an der Oberseite der Trennwand (17) angeordnet ist.

11. Ventilanordnung nach einem der vorstehenden Ansprüche, **dadurch gekennzeichnet, dass** das Saugventil (27) einen Ventilteller (29) aufweist, der größer als ein Ventilteller (35) des Druckventils (32) ist und/oder dass dem Saugventil (27) ein Gewicht (31) zugeordnet ist, dass geringer ist als ein dem Druckventil (32) zugeordnetes Gewicht (43).

12. Ventilanordnung nach einem der vorstehenden Ansprüche, **dadurch gekennzeichnet, dass** das Saugventil (27) und das Druckventil (32) jeweils Ventilteller (29, 35) aufweisen, die unabhängig voneinander vertikal beweglich angeordnet sind.

13. Ventilanordnung nach einem der vorstehenden Ansprüche, **dadurch gekennzeichnet, dass** das Saugventil (27) gewichtsbelastet ist.

14. Ventilanordnung nach einem der vorstehenden Ansprüche, **dadurch gekennzeichnet, dass** das Druckventil (32) gewichtsbelastet ist.

15. Ventilanordnung nach einem der vorstehenden Ansprüche, **dadurch gekennzeichnet, dass** dem Druckventil (32) eine Stelleinrichtung (38) mit einer Schließfeder (40) zugeordnet ist, wobei die Stelleinrichtung (38) axial oberhalb des Druckventils (32) neben der Öffnung (19) angeordnet ist.
